# EUROPEAN PATENT APPLICATION

(11) **EP 4 817 388 A2**
(43) Date of publication of application: **07.10.2026**
(21) Application number: 26192026.8
(22) Date of filing: 13.02.2024
(51) Int. Cl.: A01C 23/00

(54) **DISTRIBUTION PLATE FOR USE IN A DISTRIBUTION DEVICE AND DISTRIBUTION DEVICE PROVIDED WITH SUCH A DISTRIBUTION PLATE**

(30) Priority: 13.02.2023 DE 102023103402
(62) Document number(s) of the earlier application(s) in accordance with Art. 76 EPC: 24157274.2 / 4 413 843
(71) Applicant: Alrena B.V., 7665 SH Albergen (NL)
(72) Inventor: SCHURINK, Gerard Johannes, 7665 SH Albergen (NL); HOEK, Johannes Bernardus Maria, 7665 SH Albergen (NL); MAATHUIS, Jolien Maria Anna, 7665 SH Albergen (NL)
(74) Representative: Patentwerk B.V.

(57) **Abstract**

The present invention relates to a distribution plate for use in a distribution device for liquid substances, for example manure, the distribution plate comprising a supply side, which supply side is provided with at least one supply opening, and a discharge side at least partly facing away from the supply side, which discharge side is provided with at least one discharge opening at least one continuous connection extending between the at least one supply opening and the at least one discharge opening in such a way that the at least one supply opening connects to the at least one discharge opening. The invention also relates to a distribution device provided with such a distribution plate.

## Description

The present invention relates to a distribution plate for use in a distribution device, in particular a distribution device for liquid substances. The invention also relates to a distribution device for liquid substances, preferably provided with a distribution device according to the present invention. Furthermore, the invention relates to a kit of parts, in particular a distribution chamber and a distribution plate.

Soil fertilization involves the use of fertilizer equipment designed to distribute fertilizers, in particular liquid manure, evenly over the soil. For this purpose, the fertilizer equipment is equipped with one or more (usually two) spreading arms, which are provided with a plurality of pipes that direct the liquid manure to different distribution openings to reach the soil. Distributors are used to distribute the liquid manure to the plurality of pipes, which for this purpose are often placed on the spreading arms to limit the total pipe length. Existing distributors are provided with a manure inlet connected to a manure reservoir (for example a slurry truck) and a plurality of manure outlets to which the plurality of pipes are connected. Laws and regulations are becoming increasingly stringent in the agricultural industry. Particularly with regard to the nitrogen emissions, more and more measures are being taken to combat the global warming. As a result, traditional manure, which has been widely used and is widely used to this day, is less and less able to meet the strict requirements. This known manure is relatively liquid in nature and contains pieces. Instead of this, the market is moving toward increasingly liquid manure. This manure has a very high concentration, which means that less needs to be used. This new type of manure is also less viscous and usually contains fewer pieces.

Because this manure is typically more viscous and more highly concentrated, less of it needs to be applied to agricultural land. In order to spread less manure on agricultural land, the through hole on the spreading arms is smaller. However, this increases the risk of clogging, as it is possible for a few pieces in the liquid manure to accumulate in such a narrow through hole and thus clog the through pipe. Existing distributors are usually equipped with one or more rotating blades and a perforated disk arranged on an inside of the distributor against the manure outlets, which perforated disk is positioned relative to the manure outlets in such a way that the holes of the perforated disk coincide with the manure outlets. As the blades slide along the perforated disk, which acts as a contra-rotating blade, solid particles located in the liquid manure are chopped to some extent, which helps the manure to flow out. However, with this newer, more liquid type of manure, the risk of clogging is greater because the through hole at the end of a hose is typically smaller; the blades in the distribution device are not capable of finely chopping the manure along such a through hole with this more liquid type of manure. Although reference is made to the use of liquid manure, it is also conceivable that the present invention may be used in combination with other liquids having a viscosity comparable to the type of liquid manure of the present invention.

It is a first object of the present invention to provide a distribution plate that reduces the risk of clogging.

A second object is to provide a distribution plate that is suitable for use with more viscous substances.

For this purpose, the present invention provides a distribution plate for use in a distribution device for liquid substances, for example manure, the distribution plate comprising a supply side, which supply side is provided with at least one supply opening, and a discharge side at least partly facing away from the supply side, which discharge side is provided with at least one discharge opening, at least one continuous connection extending between the at least one supply opening and the at least one discharge opening, such that the at least one supply opening connects to the at least one discharge opening, wherein the surface area of the at least one supply opening is smaller than, and/or equal, to the surface area of the at least one discharge opening.

The at least one continuous connection, which preferably fluidically connects the supply side and the discharge side, allows the liquid substance, such as manure, to pass through. In this way, the liquid substance can be conducted from one side of the distribution plate to the other. Because the opening on the supply side is smaller than the opening on the discharge side, less accumulation can occur downstream. A cutting element that moves along the opening on the supply side is configured to chop some pieces in the liquid substance in such a way that they fit through the opening. Because the opening on the supply side is smaller, it can be ensured that even if the chopped piece is rotated, no clogging will occur, at least in the opening on the discharge side. It is conceivable for the distribution plate as such to perform a sieve function. Although reference is made to a distribution plate, the distribution plate may also be referred to as a sieve plate in the present invention. Because the risk of clogging is greater with the more viscous manure, this distribution plate is in particular suitable for use with more viscous manure, in particular liquid manure. When the surface area of the supply opening and the surface area of the discharge opening are equal, the distribution plate must be thin; for example, it could have a thickness in the range of 0.1 cm to 5 cm, preferably 0.1 cm to 2.5 cm, more preferably 0.1 cm to 1.5 cm.

The distribution plate is preferably at least partly formed by a substantially flat body, wherein the supply side and the discharge side of the sieve plate are preferably formed by two surfaces of the flat body, preferably two surfaces facing away from each other. It is optionally conceivable for the distribution plate to form an integral part of a housing, for example in that the supply opening(s) and discharge opening(s) are arranged in a wall or plate part of such a housing with continuous connection(s) extending therebetween.

According to one embodiment of the present invention, the at least one supply opening has a surface area in the range of approximately 0.5 mm2 to 100 mm2, preferably in the range of approximately 3 mm2 to 80 mm2. The extreme values can also be selected from the following surface areas: 2 mm2, 5 mm2, 10 mm2, 20 mm2, 30 mm2, 40 mm2, 50 mm2, 60 mm2, and/or 70 mm2. Ranges can be formed arbitrarily between these. The at least one discharge opening can have a surface area that is in the same range, provided that the surface area of the discharge opening is at least greater than the surface area of the supply opening. This dimension has proven successful in practice for providing a good sieve function of the distribution plate. In this way, it is also possible to ensure that any pieces in the liquid substance can be chopped sufficiently finely. The dimension of the supply surface area has been found to be small enough to prevent any, or almost any, accumulation of pieces of manure when using the distribution plate in a distribution device.

Preferably, the at least one continuous connection has a, preferably continuously, increasing and/or expanding cross-sectional area, at least in the direction from the at least one supply opening to the at least one discharge opening. Because the continuous connection has an increasing cross-sectional surface area, it can be ensured that any chopped pieces that pass through the supply opening cannot get stuck in the continuous connection. The size of any pieces, in particular the maximum size thereof, is determined by the surface area of the supply opening. As a result, the expanding and/or increasing cross-sectional surface area of the continuous connection ensures that these pieces cannot get stuck because they are always smaller. Preferably, the cross-sectional surface area of the at least one continuous connection is enlarged and/or increased over the entire path between the supply opening and discharge opening. This means that the at least one continuous connection has an exclusively increasing and/or expanding cross-sectional area, at least in the direction from the at least one supply opening to the at least one discharge opening. This contributes to the sieve function of the distribution plate. It is conceivable for the at least one continuous connection to have a substantially conical shape. Such a shape is relatively easy to arrange in the distribution plate, and it has been found that this shape of the continuous connection works well. It is conceivable for a central axis of the at least one continuous connection to be at least partly, preferably substantially perpendicular to the supply side and/or the discharge side. This is advantageous for throughput.

In one embodiment, the supply side is provided with a plurality of supply openings, and the discharge side is provided with a plurality of discharge openings, wherein in each case a plurality of continuous connections extend between the plurality of supply openings and the plurality of discharge openings.

Preferably, all supply openings are substantially the same size, and preferably all discharge openings are also the same size. This ensures that the size of any pieces does not depend, or hardly depends, on the supply opening through which such a piece passes. The total flow, or at least the pressure required to achieve a certain flow, of liquid substance depends on the number of supply openings and discharge openings. Placing more supply openings increases a cumulative surface area through which liquid substance can move. As a result, the pressure required to achieve a predetermined throughput of liquid substance is lower.

Preferably, a plurality of supply openings and/or the plurality of discharge openings are grouped together, preferably wherein the grouped supply openings and/or the discharge openings form a throughput section. The number of supply openings and/or the plurality of discharge openings grouped per group is highly dependent on the desired throughput capacity. For example, it is conceivable that the number of supply openings and/or the plurality of discharge openings is between 2 and 50, preferably between 2 and 25. Not only can the number of supply openings and discharge openings differ, but the specific surface area thereof can also vary depending on the specifications or requirements. The distribution plate preferably comprises a plurality of groups of a plurality of supply openings and/or discharge openings, which groups lie at a mutual distance, with a plurality of continuous connections extending therebetween in each case. The number of supply openings included per group can vary. This can be used, for example, to compensate for a difference in the hose length of the hoses that are, for example, connected to the drains of a distribution device. It is conceivable for the distribution plate to comprise a plurality of throughput sections, wherein preferably at least one, more preferably a plurality of throughput sections are formed by a group of a plurality of supply openings and/or a plurality of discharge openings having continuous connections extending therebetween.

The invention also relates to a distribution device for liquid substances, for example manure, comprising a distribution chamber, which distribution chamber is provided with at least one inlet and a plurality of drains for liquid substances, at least one distribution plate, preferably a distribution plate according to the present invention, which distribution plate is provided with at least one supply opening, preferably located on a side of the distribution plate facing the inlet, and at least one discharge opening, preferably located on a side of the distribution plate facing the drains, and at least one continuous connection extending between the supply opening and discharge opening, wherein the at least one discharge opening of the distribution plate is, directly or indirectly, connected and/or opens to at least one drain of the distribution chamber, a rotor located in the distribution chamber, which rotor is provided with at least one cutting element that can be moved along at least one supply opening of the distribution plate, wherein the at least one supply opening has a smaller surface area than the at least one discharge opening and/or at least one, preferably all, drains of the distribution chamber. The distribution plate is preferably located in the at least one distribution chamber.

Because the at least one discharge opening of the distribution plate is, directly or indirectly, connected and/or opens to at least one drain of the distribution chamber, it can be ensured that the liquid substance is forced through the distribution plate and the above mentioned advantageous effects are obtained. In this way, because the supply opening is narrower than the discharge opening, it can be ensured that any pieces in the liquid substance do not cause clogging downstream. By making the supply opening sufficiently narrow, the distribution plate can also act as a filter. Because the cutting element chops any larger pieces sufficiently fine, a supply opening will become free after such a cutting element passes through. This ensures that the distribution plate acting as a filter does not become clogged, unlike a static filter.

The at least one distribution plate preferably comprises a plurality of supply openings and a plurality of discharge openings, and wherein a plurality of discharge openings of the distribution plate are, directly or indirectly, connected and/or open to at least one drain of the distribution chamber. It is conceivable for the distribution plate to comprise at least two groups having a plurality of supply openings and a plurality of discharge openings, and wherein the discharge openings of the at least two groups are each, directly or indirectly, connected and/or open to a drain of the distribution chamber. Because the discharge opening or group of discharge openings is aligned with the drains of the distribution chamber, a good, filtered flow of liquid substance can be realized. With such a distribution device, it is possible to achieve that the pieces in substantially all discharge pipes are small enough to significantly reduce or eliminate the risk of clogging due to the accumulation of pieces in the liquid substance. The at least one cutting element is preferably configured to cover a plurality of supply openings, preferably a group of supply openings, of the distribution plate simultaneously. Because a cutting element can cover a group of supply openings, the pressure on the remaining supply openings is increased, thus improving the distribution of liquid substance and the pipes connected thereto.

In an alternative embodiment, the distribution plate is an integral part of the distribution device, in particular of the distribution chamber, wherein at least one discharge opening is at least a part of at least one of the drains. This can ensure an efficiently designed variant, wherein less material is required. The distribution plate can be formed in a substantially integral manner with various components as long as the supply opening is located on the supply side.

If at least one discharge pipe connected to a drain, the at least one discharge pipe forms a discharge channel, wherein the surface area of the at least one supply opening is smaller than the surface area of the discharge opening and/or the cross-sectional surface area of the discharge channel. This further contributes to the filter function of the distribution plate. In principle, the cross-sectional surface area is always greater downstream of the supply opening, and in principle there should be enough room for any pieces in the liquid substance to flow through. This is in particular advantageous when a cross-sectional surface area of the region downstream of the supply opening is larger than the surface area of the supply opening. The downstream region preferably forms a channel, which channel can be formed by a hose connected to the distribution device, whether or not in combination with a coupling connected to one end of the hose. In order to achieve good chopping of any pieces, it is advantageous if the at least one cutting element is pressed against the distribution plate under preload, for example through the intervention of a compression spring. In this way, the cutting element can chop any stuck piece in the liquid substance as close to the supply side of the distribution plate as possible until said piece is small enough to flow through the supply opening.

The present invention also relates to a kit of parts for making a distribution device, comprising at least one distribution plate, in particular according to an embodiment of the invention, and a distribution chamber, preferably according to an embodiment of the invention.

The present invention will be described in greater detail below with reference to the following non-limiting figures, in which:
- Fig. 1 is a schematic perspective view of a cross section of a distribution device with a distribution plate according to one embodiment of the invention;
- Fig. 2 shows a top view of a cross section of a part of the distribution plate;
- Fig. 3 shows a bottom view of the distribution plate on a part of the distribution chamber; and
- Fig. 4 shows a cross section of a part of the distribution plate on the distribution device.

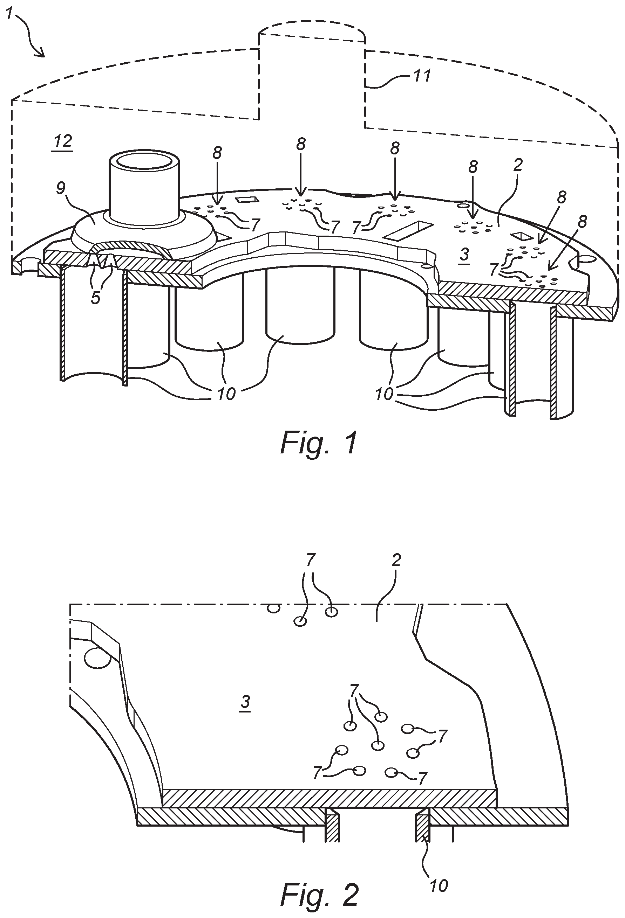

Fig. 1 schematically shows the distribution device 1 according to the present invention. In this case, for the sake of illustration, the housing of the distribution device is shown transparent, which housing at least partly defines the distribution chamber 12. There is an inlet 11 and a plurality of drains on the distribution chamber. The liquid medium can flow via the inlet through the distribution plate 2 and subsequently through the outlets 10. A cutting element 9 can be moved along the distribution plate 2 and moves in particular along the supply openings 7 arranged on the supply side 3 of the distribution plate 2. If there are residues and/or pieces in the liquid substance that are too large to flow through the plurality of supply openings 7, the cutting element 9, which in this case is formed by a blade 9, can chop these pieces. The supply openings 7 are arranged in a plurality of groups 8, wherein in this embodiment each group 8 of supply openings comprises a total of eight supply openings 7. This number can be adjusted to suit the desired throughput capacity. Each group 8 of supply openings 7 is aligned with a corresponding drain 10 of the distribution device 1. The cutting element 9 moves along the groups 8 and covers them one by one, wherein any residues can be chopped as mentioned above. It has been found that a surface area of the supply openings 7 that is in the range of approximately 0.5 mm2 to 100 mm2, preferably in the range of approximately 3 mm2 to 80 mm2 is small enough to allow the distribution plate 2 to perform a good filter function. This means that, by using such small supply openings 7, even very small pieces are initially caught because they do not fit through a supply opening 7 and are chopped by the cutting element 9. As a result, the likelihood of clogging can be significantly reduced. This is in particular because any pieces that can flow through the system after the distribution plate 2 (downstream) are at least smaller than the supply opening 7 itself.

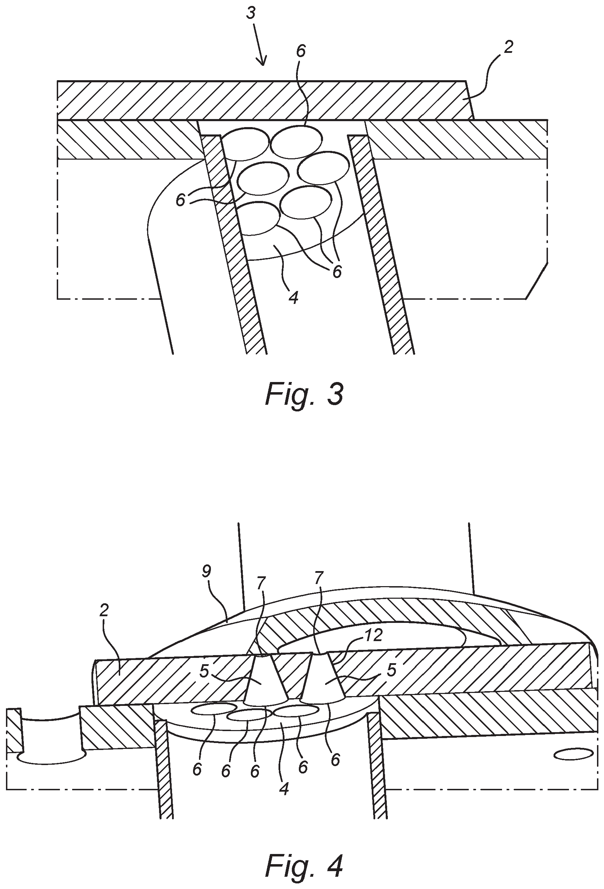

Fig. 2 shows a supply side 3 of the distribution plate 2 in more detail. Here, the way the supply openings 7 are grouped on the supply side 3 of the distribution plate 2 is shown in more detail. Here, the supply openings 7 are placed in a pattern, wherein there is one central supply opening 7 and a number of supply openings 7 placed in a circle around it. It is clear that other patterns, such as a matrix-like pattern of supply openings 7, are also possible. The number of supply openings 7 arranged on the supply side 3 can also be changed. Placing more supply openings 7 increases the throughput capacity. This can also be achieved by increasing the size, in particular the surface area, of the individual supply openings 7, which is also possible. Fig. 3 shows a bottom view of the part of the distribution plate 2 shown in Fig. 2. The discharge side 4 of the distribution plate 2 can be seen here. A plurality of discharge openings 6 are arranged on the discharge side. In this embodiment, the discharge openings 6 are arranged in the same pattern as the supply openings 7. However, the surface area of the individual discharge openings 6 is greater than the corresponding surface areas of the individual supply openings 6.

Fig. 4 shows a cross section of the distribution plate 2, wherein the continuous connection 5 is also clearly visible. The continuous connections 5 shown in this embodiment have a continuously enlarged conical shape 12. The cutting element 9 shown in this figure moves over the supply openings 7 to chop some pieces until they can flow through the supply opening 7. The continuously varying shape 12 of the continuous connection 5 allows a piece in the liquid substance to pass through the discharge opening 6 of the continuous connection 5 if said piece fits through the supply opening 7. This is a direct result of the fact that the discharge opening 6 is larger than the supply opening 7. Because the continuous connection 5 also varies in the direction from the supply opening 7 to the discharge opening 6, it is possible to achieve that such a piece in the liquid substance does not get stuck in the continuous connection 5. A cross-sectional surface area of a region downstream of the discharge opening 6 is preferably also larger than the surface area of the supply opening 7. In this way, the likelihood of clogging can be significantly reduced.

## Claims

1. A distribution plate (2) for use in a distribution device for liquid manure, the distribution plate (2) comprising;
∘ a supply side (3), which supply side (3) is provided with at least one supply opening (7), and
∘ a discharge side (4) facing away from the supply side (3), which discharge side (4) is provided with at least one discharge opening (6)
∘ at least one continuous connection (5) extending between the at least one supply opening (7) and the at least one discharge opening (6),
wherein the surface area of the at least one supply opening (7) is smaller than the surface area of the at least one discharge opening (6)
wherein the supply side (3) is provided with a plurality of supply openings (7), and wherein the discharge side (4) is provided with a plurality of discharge openings (6), wherein a plurality of continuous connections (5) extend between the plurality of supply openings (7) and the respective plurality of discharge openings (6)
wherein a plurality of supply openings and/or the plurality of discharge openings (6) are grouped (8) together, and wherein the grouped (8) supply openings (7) and/or the discharge openings (6) form a throughput section.

2. The distribution plate (2) according to claim 1, wherein the at least one continuous connection (5) has a, preferably continuously, increasing and/or expanding cross-sectional area, at least in the direction from the at least one supply opening (7) to the at least one discharge opening (6).

3. The distribution plate (2) according to claim 1 or 2, wherein the at least one continuous connection (5) has a substantially conical shape (12).

4. The distribution plate (2) according to claim 1, wherein the distribution plate (2) comprises a plurality of mutually distanced groups (8) of a plurality of supply openings (7) and/or discharge openings (6), with a plurality of continuous connections extending (5) therebetween in each case.

5. The distribution plate (2) according to any of the preceding claims, wherein a central axis of the at least one continuous connection (5) is at least partly, preferably substantially perpendicular to the supply side (3) and/or the discharge side (4).

6. The distribution plate (2) according to any of the preceding claims, wherein the at least one supply opening (7) has a surface area in the range of approximately 0.5 mm2 to 100 mm2, preferably in the range of approximately 3 mm2 to 80 mm2, and wherein the at least one discharge opening (6) has a surface area in the range of approximately 0.5 mm2 to 100 mm2, preferably in the range of approximately 3 mm2 to 80 mm2.

7. A kit of parts for making a distribution device (1), comprising at least one distribution plate (2) according to any of claims 1-6, and a distribution chamber,.
